(19) Europäisches Patentamt
European Patent Office
Office européen des brevets

(11) **EP 3 851 427 B1**

(12) **EUROPEAN PATENT SPECIFICATION**

(45) Date of publication and mention
of the grant of the patent:
**31.01.2024 Bulletin 2024/05**

(21) Application number: **20000020.6**

(22) Date of filing: **15.01.2020**

(51) International Patent Classification (IPC):
**C05C 9/00** *(2006.01)*    **C05G 3/90** *(2020.01)*
**C05G 5/20** *(2020.01)*    **C05G 5/30** *(2020.01)*

(52) Cooperative Patent Classification (CPC):
**C05C 9/00; C05G 3/90; C05G 5/20; C05G 5/30**

(54) **LIQUID SOLVENT COMPOSITIONS CONTAINING N-(N-BUTYL)THIOPHOSPHORIC TRIAMIDE (NBPT) AND THEIR USE AS AN ADDITIVE TO AMIDE NITROGEN CONTAINING FERTILISERS**

FLÜSSIGE ZUSAMMENSETZUNGEN UMFASSEND N-(N-BUTYL)THIOPHOSPHORIC TRIAMIDE (NBPT) UND DEREN VERWENDUNG ALS ZUSATZMITTEL FÜR AMID-STICKSTOFF ENTHALTENDE DÜNGEMITTEL

COMPOSITIONS LIQUIDES CONTENANT N-(N-BUTYL)THIOPHOSPHORIC TRIAMIDE (NBPT) ET LEUR UTILISATION EN TANT QU'ADDITIF POUR ENGRAIS CONTENANT DE L'AZOTE AMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.07.2021 Bulletin 2021/29**

(73) Proprietors:
• **Grupa Azoty S.A.**
  **33-101 Tarnow (PL)**
• **Grupa Azoty Zaklady Azotowe Chorzów Spólka Akcyjna**
  **41-503 Chorzów (PL)**

(72) Inventors:
• **LUBERDA-DURNAS, Katarzyna**
  **33-100 Tarnów (PL)**
• **JASIAK-MALOTA, Karolina**
  **42-470 Siewierz (PL)**
• **SOCHA, Jan**
  **33-100 Tarnów (PL)**
• **CIERPICH, Anna**
  **33-103 Tarnów (PL)**
• **STACHOW-PIWOWARSKA, Danuta**
  **33-101 Tarnów (PL)**
• **POREBA, Monika**
  **33-102 Tarnów (PL)**

(56) References cited:
**WO-A1-2018/152369    US-A1- 2014 047 882
US-A1- 2019 112 241**

Remarks:
The file contains technical information submitted after the application was filed and not included in this specification

## Description

### Technical field

The invention relates to stabilisation of N-(n-butyl)thiophosphoric triamide (NBPT) both in a liquid composition and following application on fertiliser. In particular, the subject matter of the invention is a liquid urease inhibitor composition containing N-(n-butyl)thiophosphoric triamide (NBPT), a method of manufacture of such a composition, and the use of such a composition as an additive to amide nitrogen containing fertilisers, including urea, urea ammonium nitrate solutions, and multicomponent NPK fertilisers (containing nitrogen, phosphorus and potassium).

### State of the art

Nitrogen fertilisers are distinctive by the highest yield-enhancing efficiency among all factors that affect the intensification of crop production. Among them, the most commonly used and at the same time the most universal one is urea, which is distinguished by the highest nitrogen content (46%).

However, significant amounts of this nutrient may be lost and unavailable to plants as a result of urease-catalysed hydrolytic decomposition of urea in soil. As a result, urea decomposition leads to the volatilisation of ammonia and carbon dioxide.

Urease is an enzyme which is widespread in nature, found in cells of higher plants, bacteria, fungi, algae, invertebrates, and in soil. Gas emission into the air as effected by soil urease activity is both an environmental problem as well as an economic and agronomic problem.

The environmental harmfulness of ammonia from the process of hydrolytic decomposition of urea results not only from its direct toxicity, but above all from its high acidification and eutrophication potential. An indirect result of the hydrolysis process is increased greenhouse gasses emission to the atmosphere. The intensity of ammonia generation depends, among others, on soil properties (type, moisture, microbiological activity and pH) and climatic conditions (temperature and amount of precipitation).

In order to reduce and slow down the release of ammonia from urea fertilisers, it is advisable to cover them with a layer of soil immediately following application, encapsulated them with polymers and use together with a substance reducing urease enzymatic activity called an inhibitor. Out of multiple chemical substance denoted by this term, one should mention, among others, metal [Ag(I), Hg(II), Cu(II), Zn(II), Cd(II), Co(II), Ni(II), Pb(II)] salts, boron compounds, hydroxamic acids, urea derivatives, thiol compounds, quinones and heterocyclic compounds.

The most studied and the best described urease inhibitors include phosphoric acid amides and their esters, which are transition state analogues. And transition state analogues are defined as compounds exhibiting structural and electron characteristics similar to the transition state. Inhibitory properties of this group of molecules have been first described in US 4,530,714 patent (Allied Corporation, 1985). These compounds act by blocking three active sites of the urease enzyme by forming bonds with two nickel atoms and an oxygen atom from the carbamate bridge linking both metals, thereby preventing the urea molecule from reaching the nickel atom.

In addition, phosphoric acid triamides can be used on farms to slow down the enzymatic decomposition of urea present in animal droppings, which consequently reduces odour emissions.

One of disclosed examples of an effective urease inhibitor is N-(n-butyl)thiophosphoric triamide (NBPT), a white solid with a melting point of 58-60°C. This substance may decompose due to moisture and elevated temperatures, in particular above 60°C. Its direct application on urea fertiliser is very difficult due to its solid form and poor water solubility. The lack of homogeneity of coating and, more importantly, no adsorption on the surface of fertilisers constitutes a significant problem. Therefore, it is necessary to use NBPT solutions in a suitably selected system of organic solvents, which should be defined by low toxicity, volatility and flammability, minimum water content and low manufacturing cost. In addition, they should meet basic criteria such as low odour, high solubility and NBPT stability, and resistance of organic NBPT solutions to crystallisation at sub-zero temperatures.

The search for appropriate solvent systems for NBPT has been carried out for years. This is evidenced by the number of available patents and chemical compounds claimed therein.

The US 4,530,714 patent description discloses a composition of and a method of manufacture of NBPT solutions comprising acetone, diisobutyl ketone, methanol, ethanol, isopropyl alcohol, diethyl ether, toluene, methylene chloride, chlorobenzene, or petroleum distillates. However, most of the above-mentioned organic solvents are of limited use due to their excessive flammability and toxicity. The patent focuses on the use of compositions to achieve high yields and inhibition of urease activity.

In the description of US 2015/0143860 A1 patent application, DMSO, which is known for its characteristic unpleasant odour, was used to prepare a NBPT composition.

The PL 232 924 B1 patent description discloses a composition containing NBPT and solvents selected from 2,5,7,10-tetraoxaundecane (TOU) and/or ethoxylated fatty amines and/or ethoxylated fatty alcohols. In the description of PL 232 924 B1 problems with NBPT stability, as NBPT may be hydrolysed or thermally decomposed, were indicated. Additionally, known difficulties with application of NBPT on fertiliser granules were indicated. The composition disclosed in PL 232 924 B1 is used to coat urea or nitrogen fertilisers, and the solvents used are harmless to the environment . The composition also provides a reduction of fertiliser odour.

The US 5,698,003 patent description discloses solutions obtained by dissolving NBPT in glycols and glycol derivatives. These mixtures exhibit high stability under storage conditions. Co-solvents including N-methylpyrrolidone (NMP) and non-ionic surfactants are also expected to be used to provide the solutions with desired properties. However, N-methylpyrrolidone poses a serious hazard to human health due to its foetotoxic and teratogenic effects.

The US 5,352,265 patent description discloses homogeneous granular compositions containing urea, NBPT and dicyandiamide, in which urea accounts for over 90% of their content. These compositions provide an increase in nitrogen absorption efficiency. The homogeneous granular compositions are produced by using NBPT solutions in a solvent selected from the group consisting of liquid amines, 2-pyrrolidone, N-methylpyrrolidone and N-alkyl-2-pyrrolidone.

The US 5,364,438 patent description discloses liquid NBPT compositions containing aqueous urea solution, ammonium nitrate, and dicyandiamide. In the description, low stability of NBPT, as this compound is sensitive to heat and water, was also indicated. NBPT stability is to be improved by the use of NBPT stabilisers, yet the description does not disclose details of NBPT stabilisers.

The EP 2 376 506 B1 patent description discloses a NBPT composition with solvents selected from the group of hydroxy acid esters and heterocyclic alcohols. The solvents used in the composition are solvents which are degradable to natural substances and are of low toxicity, low volatility and low flammability. The description points to the possibility of NBPT decomposition in the presence of moisture or elevated temperature, and at the same time the description provides for the use of additives to the composition to improve the stability or the ability to use the composition. Indicated additives include, among others, crystallisation inhibitors, surface active agents and dyes.

The EP 3 472 122 A1 application discloses a composition containing NBPT, a liquid nonaqueous carrier, and a dye system comprising an azo dye and water. The composition provides improved colour stability, which is to facilitate determination of the degree of fertiliser coating with the composition.

The US 8,048,189 patent description discloses NBPT compositions containing amino alcohols such as ethanolamine, diethanolamine, triethanolamine, monoisopropanolamine, and diisopropanolamine. US 8,048,189 also provides for the use of a co-solvent and dye. The disclosed compositions provide reduced nitrogen release from fertilisers, and the use of amines ensures the obtaining of stable solutions with high NBPT concentration. Urea-based fertilisers in granular or liquid form are to be used as fertilisers. The patent description also indicates NBPT thermal instability and suggests to exercise caution during preparation to prevent NBPT decomposition. The disclosed compositions exhibit increased NBPT stability compared to commercial compositions. Further compositions for fertilizers containing NBPT are disclosed in WO 2018/152369 A1, US 2014/047882 A1 and US 2019/112241 A1.

Therefore, the object of the present invention is to provide new solvents and NBPT compositions that would provide NBPT storage and use stability, have low odour and be of low flammability and low explosiveness, and their physicochemical properties would ensure easy application of the composition on solid fertilisers as well as mixing with liquid fertilisers.

**Subject matter of the invention**

The subject matter of the present invention is a liquid composition for application on solid fertilisers, according to claim1.

Preferably, the dye is not a dye from the azo dye group.

The content of the active substance is in the range of 15-35 wt%.

The content of the organic solvent from the triol group is in the range of 25-45 wt%.

The content of the co-solvent is in the range of 30-50 wt%.

The content of the dye is in the range of 0.01-1 wt%.

The dye is selected from the group consisting of acid blue preferably at a concentration in the range of 100-200%.

The organic solvent from the triol group is glycerine.

The co-solvent is benzyl alcohol or N,N-dimethylacetamide.

In one embodiment, the liquid composition comprises 15-35 wt% N-(n-butyl)thiophosphoric triamide, 25-45 wt% glycerine, 30-50 wt% benzyl alcohol, and 0.01-1 wt% typical acid blue FG.

In an alternative embodiment, the liquid composition comprises 15-35 wt% N-(n-butyl)thiophosphoric triamide, 25-45 wt% glycerine, 30-50 wt% N,N-dimethylacetamide, and 0.01-1 wt% typical acid blue FG.

Furthermore, a method of manufacture of liquid composition according to the invention is provided, wherein the method comprises:

• mixing the active substance in the form of N-(n-butyl)thiophosphoric triamide and a solvent system according to the invention at a temperature up to 40°C to dissolve the active substance, and then

- adding a dye and stirring and heating at a temperature up to 40°C to dissolve the dye.

Preferably, the dye is not selected from the azo dye group.

The subject matter of the invention is also the use of the liquid composition of the present invention as an additive to amide nitrogen containing fertilisers, according to claim 4.

Preferably, the amide nitrogen containing fertiliser is selected from the group consisting of urea, urea ammonium nitrate solutions and multicomponent NPK fertilisers.

Therefore, the scope of the disclosure covers liquid compositions containing NBPT as an active substance and an organic solvent from the triol group being glycerine in a system with the co-solvents: (a) benzyl alcohol (b) or/and N, N-dimethylacetamide. The content of the active substance is in the range of 15-35 wt%. In addition to the composition, a dye according to the invention is added to verify the uniformity of fertiliser coating. In the preferred form of the present disclosure, the dye is at least acid blue FG 200%.

The main objective of the present invention is to obtain liquid compositions for fertilising uses and containing NBPT as an active substance, wherein the compositions according to the disclosure have high stability both at room temperature and at low temperatures (down to - 10°C) after the lapse of two months.

A stable composition within the scope of this disclosure means a mixture of solvents with NBPT, the level of which does not change by more than 0.5% during storage and up to 5% during the ageing of fertilisers in a climatic chamber (30°C) in closed containers for 4 weeks. The stability of the composition is affected by the selection of suitable solvents, which should not react with the fertiliser carrier, which consequently limits the degradation of the active substance (NBPT).

As described herein, storage relates to the stability of the composition in sealed packages in a dry, cool and ventilated room. The compositions should be stored away from heat sources. They should be protected from direct sunlight exposure, frost penetration and moisture. They should be protected from temperature drops below -10°C and temperature increases above 40°C.

As described herein, the ageing of fertilisers is the storage of inhibitor coated fertilisers in a closed container until the fertilisers are sown in the field. Under temperature conditions up to 30°C.

Another object of the present invention is to obtain an NBPT composition with organic solvents which essentially does not have unpleasant odours and does not pose a hazard related to its flammability and explosiveness.

Another object of the present invention is to prepare liquid compositions of appropriate density and viscosity. Owing to suitable density and viscosity parameters, the compositions of the present invention can be easily applied to solid fertiliser.

In order to simultaneously accomplish all the above-mentioned objectives and gain a competitive advantage, new NBPT comprising compositions have been developed, which are explained in detail below.

The compositions are prepared using a reactor provided with a stirrer and a heating system into which a solvent system and NBPT are introduced. Next, everything is stirred and heated up to 40°C until the active substance is dissolved, followed by the addition of a dye.

A solid dye is used to prepare the composition. The dye is acid blue FG, preferably at 100% and 200% concentration. The so prepared compositions can be used as an additive to amide nitrogen containing fertilisers, i.e. urea-based fertilisers such as urea, urea ammonium nitrate solutions and multicomponent NPK fertilisers.

**Embodiments**

In order to better understand the principles of operation and realisation of this invention, a description of embodiments is provided below. The following embodiments do not limit the scope of the invention, which scope is defined by the claims.

Example 1

25-45 g glycerine, 29-39 g benzyl alcohol and 15-35 g NBPT were introduced into the reactor provided with a stirrer and a heating system. Everything was stirred and heated up to a temperature not exceeding 40°C until NBPT was completely dissolved. Next, 0.01-1 g dye was added. Stirring and heating were continued until the dye was completely dissolved.

When the dye in the form of acid blue FG 200% and a composition containing 25 wt% N-(n-butyl)thiophosphoric triamide, 35 wt% glycerine, 39 wt% benzyl alcohol and up to 1 wt% acid blue FG 200% were used, the obtained NBPT urease inhibitor-based composition was defined by the following physicochemical parameters:

$$pH = 8.06; v_{20°C} = 70.3 \text{ mm}^2/s; \rho_{20°C} = 1.144 \text{ g/cm}^3$$

**Example 2**

30-50 g N,N-dimethylacetamide, 24-44 g glycerine and 15-35 g NBPT were introduced into the reactor provided with a stirrer and a heating system. Everything was stirred and heated up to a temperature not exceeding 40°C until NBPT was completely dissolved. Next, 0.01-1 g dye was added. Stirring and heating were continued until the dye was completely dissolved. When the dye in the form of acid blue FG 200% and a composition containing 25 wt% N-(n-butyl)thiophosphoric triamide, 34 wt% glycerine, 40 wt% N,N-dimethylacetamide and up to 1 wt% acid blue FG 200% were used, the obtained NBPT urease inhibitor-based composition was defined by the following physicochemical parameters:

$$pH = 8.57; v_{20°C} = 33.5 \text{ mm}^2/s; \rho_{20°C} = 1.097 \text{ g/cm}^3$$

**Example 3**

All compositions prepared according to Examples 1-2 were applied to urea-based fertiliser for stabilisation. Urea was selected for testing.

For each fertiliser sample, the level of NBPT inhibitor was assayed immediately after stabilisation with the compositions from Examples 1 and 2, and then after 4 weeks of ageing in a climatic chamber (30°C) in closed containers. For the assays, high-pressure liquid chromatography (HPLC) was used in accordance with PN-EN 15688 standard. The results of the measurements are shown in the table below.

| Example | NBPT content - after application [ppm] | NBPT content - after 4 weeks [ppm] |
|---|---|---|
| 1 | 478 | 465 |
| 2 | 449 | 462 |

The obtained results of the analyses confirm high stability of NBPT applied to fertiliser in a given solvent system, which will make it possible to accomplish the basic objective of reducing the enzymatic activity of urease in soil conditions.

The compositions were also tested for stability during storage. Prior to and during storage, the compositions were sampled and NBPT content was assayed every week. The assays were carried out by means of high-pressure liquid chromatography (HPLC) according to PN-EN 15688 standard. The results showed a decrease in NBPT content within 0.5%.

Therefore, the innovative character of proposed compositions consists in their effective stabilisation of NBPT not only in a solution, but also following application on fertiliser.

It is worth noting that the results of the measurements of NBPT content as well as its decrease may be different when different storage conditions and/or different assay techniques (assay conditions) are used. However, regardless of the method/conditions used, comparative measurements should always show NBPT stability in the composition of the present invention.

**Claims**

1. A liquid composition for application on solid fertilisers, wherein the composition contains an active substance in the form of N-(n-butyl)thiophosphoric triamide, a solvent system, and a dye, wherein the active substance is in the range of 15-35 wt.%, wherein the solvent system comprises an organic solvent from the triol group and at least one co-solvent selected from benzyl alcohol and N,N-dimethylacetamide, wherein the organic solvent from the triol group is glycerine in the range of 25-45 wt.%, wherein the composition comprises 30-50 wt.% benzyl alcohol or 30-50 wt.% N,N-dimethylacetamide, and wherein the dye is typical acid blue FG in the range of 0.01-1 wt.%.

2. The liquid composition according to claim 1, **characterised in that** the dye is not a dye from the azo dye group.

3. The liquid composition according to claim 1, **characterised in that** the dye is selected from the group consisting of acid blue at a concentration within the range of 100-200%.

**4.** A use of the liquid composition containing an active substance in the form of N-(n-butyl)thiophosphoric triamide, a solvent system and a dye **wherein** the active substance is in the range of 15-35 wt.% and, the solvent system comprises an organic solvent from the triol group and at least one co-solvent selected from benzyl alcohol and N,N-dimethylacetamide, wherein the organic solvent from the triol group is glycerine in the range of 25-45 wt. %, wherein the composition comprises 30-50 wt.% benzyl alcohol or 30-50 wt.% N,N-dimethylacetamide, and wherein the dye is typical acid blue FG in the range of 0.01-1 wt.%, as an additive to amide nitrogen containing fertilizers.

**5.** The use of the liquid composition according to claim 4, **characterised in that** the amide nitrogen containing fertilizer is selected from the group consisting of urea, urea ammonium nitrate solution and multicomponent NPK fertilizers.

**Patentansprüche**

**1.** Flüssige Zusammensetzung zur Anwendung auf festen Düngemitteln, wobei die Zusammensetzung einen Wirkstoff in Form von N-(n-Butyl)thiophosphorsäuretriamid, ein Lösungsmittelsystem und einen Farbstoff enthält, **wobei** der Wirkstoff im Bereich von 15-35 Gew.% liegt, wobei das Lösungsmittelsystem ein organisches Lösungsmittel aus der Triolgruppe und mindestens ein Co-Lösungsmittel, ausgewählt aus Benzylalkohol und N,N-Dimethylacetamid, umfasst, wobei das organische Lösungsmittel aus der Triolgruppe Glycerin im Bereich von 25-45 Gew.-% ist, wobei die Zusammensetzung 30-50 Gew.-% Benzylalkohol oder 30-50 Gew.-% N,N-Dimethylacetamid umfasst, und wobei der Farbstoff typisches Säureblau FG im Bereich von 0,01-1 Gew.-% ist.

**2.** Flüssige Zusammensetzung nach Anspruch 1, **dadurch gekennzeichnet, dass** der Farbstoff kein Farbstoff aus der Gruppe der Azofarbstoffe ist.

**3.** Flüssige Zusammensetzung nach Anspruch 1, **dadurch gekennzeichnet, dass** der Farbstoff aus der Gruppe ausgewählt ist, die aus Säureblau in einer Konzentration im Bereich von 100-200% besteht.

**4.** Verwendung der flüssigen Zusammensetzung, die einen Wirkstoff in Form von N-(n-Butyl)thiophosphorsäuretriamid, ein Lösungsmittelsystem und einen Farbstoff **enthält, wobei der Wirkstoff im Bereich von 15-35 Gew.-% liegt und das Lösungsmittelsystem ein organisches Lösungsmittel aus der Triolgruppe ist und mindestens ein Co-Lösungsmittel, ausgewählt aus Benzylalkohol und N, N-Dimethylacetamid**, wobei das organische Lösungsmittel aus der Triolgruppe Glycerin im Bereich von 25-45 Gew.-% liegt, wobei die Zusammensetzung 30-50 Gew.-% Benzylalkohol oder 30-50 Gew.-% N,N-Dimethylacetamid umfasst, und wobei der Farbstoff typisches Säureblau FG im Bereich von 0. 01-1 Gew.-% ist, als Zusatz zu amidstickstoffhaltigen Düngemitteln.

**5.** Verwendung der flüssigen Zusammensetzung nach Anspruch 4, **dadurch gekennzeichnet, dass** das amidstickstoffhaltige Düngemittel ausgewählt ist aus der Gruppe bestehend aus Harnstoff, Harnstoff-Ammoniumnitrat-Lösung und NPK-Mehrkomponentendüngern.

**Revendications**

**1.** Composition liquide pour application sur des engrais solides, dans laquelle la composition contient une substance active sous forme de N-(n-butyl) triamide thiophosphorique, un système de solvant et un colorant, dans **laquelle la substance active est comprise entre 15 et 35 % en poids, dans laquelle le système de** solvant comprend un solvant organique du groupe des triols et au moins un co-solvant choisi parmi l'alcool benzylique et le N,N-diméthylacétamide, dans laquelle le solvant organique du groupe des triols est la glycérine dans une proportion de 25 à 45 % en poids, la composition comprenant 30 à 50 % en poids d'alcool benzylique ou 30 à 50 % en poids de N,N-diméthylacétamide, et le colorant étant un bleu acide FG typique dans une proportion de 0,01 à 1 % en poids.

**2.** Composition liquide selon la revendication 1, **caractérisée par le fait que** le colorant n'est pas un colorant du groupe des colorants azoïques.

**3.** Composition liquide selon la revendication 1, **caractérisée par le fait que** le colorant est choisi dans le groupe constitué par le bleu acide à une concentration comprise entre 100 et 200 %.

**4.** Utilisation d'une composition liquide contenant une substance active sous forme de N-(n-butyl) triamide thiophosphorique, un système de solvants et un colorant, dans laquelle la substance active est comprise entre 15 et 35 % en poids et le système de solvants comprend un solvant organique du groupe des triols et au moins un co-solvant choisi parmi l'alcool benzylique et le N,N-diméthylacétamide, dans laquelle le solvant organique du groupe des triols est une glycérine comprise entre 25 et 45 % en poids, dans laquelle la composition comprend 30 à 50 % en poids d'alcool benzylique ou 30 à 50 % en poids de N,N-diméthylacétamide, et dans laquelle le colorant est un bleu acide FG typique compris dans une fourchette de 0,01 à 1 % en poids, en tant qu'additif aux engrais contenant de l'azote amide.

5. Utilisation de la composition liquide selon la revendication 4, **caractérisée par le fait que** l'engrais contenant de l'azote amidé est choisi dans le groupe constitué par l'urée, la solution d'urée et de nitrate d'ammonium et les engrais NPK multicomposants.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4530714 A
- US 20150143860 A1
- PL 232924 B1
- US 5698003 A
- US 5352265 A
- US 5364438 A
- EP 2376506 B1
- EP 3472122 A1
- US 8048189 B
- WO 2018152369 A1
- US 2014047882 A1
- US 2019112241 A1